# EUROPEAN PATENT APPLICATION

(11) **EP 2 675 158 A1**
(43) Date of publication of application: **18.12.2013**
(21) Application number: 12744259.8
(22) Date of filing: 09.02.2012
(51) Int. Cl.: H04N 7/24

(54) **METHOD FOR THE DYNAMIC REPRODUCTION OF CONTENT IN TRANSMISSIONS IN PUSH ENVIRONMENTS**

(30) Priority: 11.02.2011 ES 201130183 P
(71) Applicant: Motive Television, S.L., 08018 Barcelona (ES)
(72) Inventor: AGUILAR FARGAS, Joan, 43204 Reus (tarragona) (ES); VANYI-ROBIN, Andre Laszlo, 08034 Barcelona (ES); FLORES D'ARCAIS, Giuseppe, 08003 Barcelona (ES); TEJA, Puneet Kamal Singh, 1160 Vienna (AT)
(74) Representative: Durán-Corretjer, S.L.P.
(86) International application number: PCT/ES2012/070082
(87) International publication number: WO 2012/107624

(57) **Abstract**

The invention relates to a method for reproducing audiovisual advertising content in transmissions in push environments without a return channel, comprising: reception and storage of an item of audiovisual content to be reproduced; reception and storage of an item of audiovisual advertising content, together with metadata associated with each item of audiovisual advertising content; determination of the time at which an item of audiovisual advertising content is to be inserted into the audiovisual content to be reproduced; and insertion of an item of audiovisual advertising content at the determined time during the reproduction of at least one pre-stored item of audiovisual content. In addition, during the audiovisual advertising content storage process, the receiver optionally stores said audiovisual advertising content according to a user profile record stored in the receiver, and, during the reproduction process, the receiver reproduces an item of audiovisual advertising content according to said user profile record.

## Description

This invention relates to a method for the dynamic reproduction of audiovisual content in transmissions in push environments.

More particularly this invention relates to a method for dynamically changing the reproduction of advertising content based on a user profile in non-linear transmissions of the push type, that is to say without a return channel.

The new technologies for switching content via a network have over recent years provided advertising agencies, media agencies and media producers with the opportunity to make drastic changes in the manner in which advertising is distributed, transported and caused to reach homes through new technological networks having new characteristics. Instead of television viewers being exposed to a single series of advertisements selected on the basis of demographic statistics, advertising content should be able to be transmitted on the basis of the individual profiles of individual users. Multinational companies such as Google have convincingly confirmed that delivering relevant advertising content to users increases user interest and provides value for the advertising agency creating the advertisement.

Some systems for the transmission of personalised advertising in which personalised assignment of the advertisement takes place on the network thanks to network intelligence systems which make it possible to switch content according to the user's profile are known. These systems are very common in broadcast transmissions with a return channel in which the receiver of audiovisual content periodically transmits information to the network from a user's profile record and subsequently the network switches the content most consistent with or most closely related to the user's profile. In these cases, the insertion of advertising content takes place in the network and the broadcasting header transmits the stream of audiovisual content with the personalised advertising content for receipt and direct reproduction on a television screen.

Also known is another type of personalised advertising transmission system for broadcast transmissions with a return channel which is based on making a selection of the advertising content at the user's receiver. In this method of personalised advertising, the user's receiver comprises an agent which selects the most relevant advertising content in relation to that user's profile from a set of advertising content available. This method requires the receiver to be capable of dynamic synchronisation at the time when insertion of the advertisement takes place.

Another type of known system for push transmissions without a return channel, in which part of the transmission is stored for subsequent reproduction, makes it possible to select advertising content in the network and control insertion of the content at the user's audiovisual content receiver.

One example of a method of inserting and reproducing advertisements in a receiver is described in document US 2010/0054707 A1. This document discloses a method and system for inserting and subsequently reproducing advertisements in a receiver having a recording function. In this method the audiovisual content receiver receives and stores audiovisual content and advertising content for insertion. Additionally, the receiver also receives and stores a descriptor with information about insertion of that advertising content in that audiovisual content. In turn, the receiver plans the time for insertion on the basis of the insertion descriptor associated with the advertising content and subsequently reproduces the advertising content on the basis of that planning. Primarily, this method makes it possible to select advertisements in the network environment. These advertisements are subsequently transmitted and stored in the receiver together with information on the insertion/replacement which has to be made, for subsequent insertion in a stream of audiovisual content. However, with methods of this type, in which the receiver reproduces what is stored on its hard disk unit, it is not possible to avoid the reproduction of advertisements which may have become obsolete over time or which may merely be not relevant to the user.

Thus, it would be advantageous to have a method which makes it possible to personalise the audiovisual advertising content in push environments transmissions without a return channel and which overcomes the abovementioned disadvantages.

According to the present invention, this is accomplished through a method which comprises the following steps:
- receiving and storing at least one item of audiovisual content which has to be reproduced;
- receiving and storing at least one item of audiovisual advertising content together with metadata associated with each item of audiovisual advertising content;
- determination of the insertion time of at least one item of audiovisual advertising content in the audiovisual content which has to be reproduced;
- insertion of at least one item of audiovisual advertising content at the specified time during reproduction of the at least one item of previously stored audiovisual content;
characterised in that:
- during the process of storing audiovisual advertising content, the receiver does or does not store at least one item of audiovisual advertising content according to a user profile record stored in the receiver;
- during the reproduction process, the receiver reproduces at least one item of audiovisual advertising content according to the user's profile record.

The method according to the present invention makes it possible to store only that audiovisual advertising content which is closest to a user profile. Additionally, as there may be an indeterminate time between storage of the audiovisual advertising content and its reproduction, when some of the previously stored audiovisual advertising content is reproduced, said reproduction takes place according to the user profile, which may have changed.

Preferably, a process of determining the start and end times for each item of audiovisual advertising content included in the audiovisual content received is carried out in the course of the process of storing the received audiovisual content.

Preferably, in the course of this process of determining the start and end times, the broadcasting header periodically sends synchronisation data to the receiver. More preferably, these synchronisation data comprise information relating to the type of audiovisual content which is being stored.

Preferably, audiovisual advertising content is stored in a specific memory section of the receiver's memory unit. In this way, this audiovisual advertising content has a longer lifetime than audiovisual content.

During the reproduction process, the receiver preferably makes a change of reproduction according to a user profile record at a particular start time. Preferably, again during the reproduction process, the receiver makes a change of reproduction according to a user profile record at a particular end time. In this way, the most appropriate and related audiovisual advertising content to the user's profile is reproduced at a given time.

Preferably, this user profile record is periodically updated on the basis of at least one type of audiovisual content reproduced. This user profile record is also preferably updated periodically in relation to the viewing frequency of at least one type of audiovisual content. This periodical updating of the user profile makes it possible to better personalise the system, because the user preferences may vary over time and thus the user's profile will adapt as time goes on.

For a better understanding, various figures which describe the different parts of a preferred embodiment of this invention are appended by way of an explanatory but not limiting example.
Figure 1 shows a diagram of a transmission diagram of a content channel together with a data channel.
Figure 2 shows a process for reproducing and inserting advertisements in a stream of reproduced content.

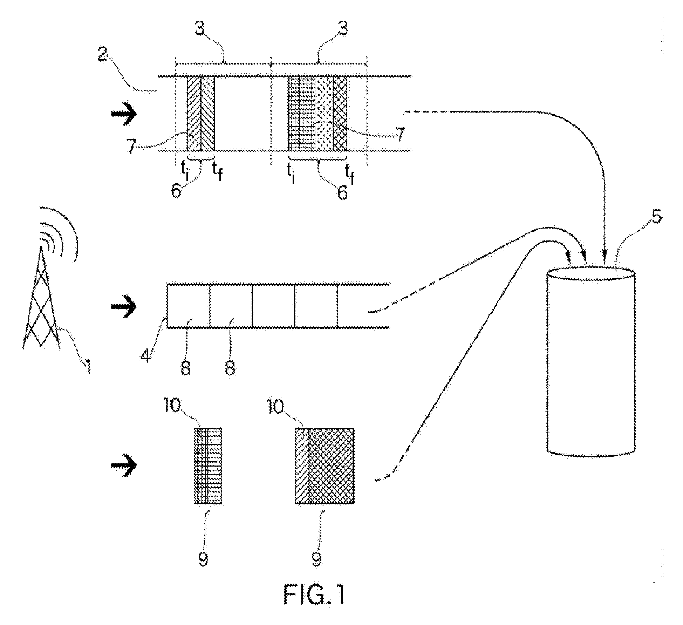

Figure 1 shows a diagram of non-linear transmission in a push environment in which a header -1- for the broadcasting of audiovisual content transmits a stream -2-of audiovisual content -3- to an audiovisual content receiver -5- for its recording and subsequent reproduction. Additionally, a stream -4- of metadata associated with each item of audiovisual content -3-transmitted to receiver -5- is transmitted. This stream -4- of metadata comprises at least one package -8- of metadata. Each package of metadata -8- in this stream -4-of metadata comprises information relating to audiovisual content -3- being transmitted, such as, for example, type of content, content identifier, etc., and this metadata is, for example, transmitted in the form of an XML file.

Every item of audiovisual content -3- transmitted comprises at least one block -6- of advertisements and each block -6- of advertisements comprises at least one advertisement -7-. The metadata associated with audiovisual content -3- also includes information relating to blocks -6- of advertisements transmitted within audiovisual content -3- in particular, such as for example, information on the number of advertisements -7-included in that block -6- of advertisements, identification of each block -6- of advertisements within a particular content -3-, identification of each advertisement -7- within each block -6- of advertisements, etc.

Additionally, broadcasting header -1- for audiovisual content -3- also transmits at least one block -9- of advertisements, which in turn comprises at least one advertisement -10-, to receiver -5-. These blocks -9- of advertisements are stored by receiver -5- in a specific FIFO-type buffer, the specific block -9- of advertisements having a lifetime such that they cannot be deleted until they have been reproduced.

Packets -8- of metadata associated with blocks -9- of advertisements including information relating to those blocks -9-, such as for example, information on the number of advertisements -10- included in a particular block -9-of advertisements, identification of a particular block -9- of advertisements, identification of each advertisement -10- within block -9- of advertisements, etc., are also transmitted in the stream -4- of metadata. This metadata is also transmitted, for example, in the form of an XML file.

According to a preferred embodiment of the invention, each item of content is sent at different times and is subsequently recorded and stored in an internal memory (not shown) of receiver -5- on the basis of a user profile record. This receiver -5- is preferably a digital television receiver.

While stream -2- of audiovisual content -3- is being recorded, receiver -5- decides whether or not it must carry out a process of detecting block -6- of advertisements on the basis of a user profile record in receiver -5-, which periodically stores user profile information, such as for example, the type of programmes normally viewed, the frequency with which different types of programmes are viewed, etc. Receiver -5- compares information from the user profile record with information on block -6- of advertisements which it wishes to detect, and this in turn is determined by packet -8- of metadata associated with that block -6- of advertisements and determines whether or not there is any match with the user profile. In parallel, receiver -5- analyses packets -8- of metadata associated with blocks -9- of advertisements already stored in the memory unit of receiver -5- and determines whether there is any block -9- of advertisements which matches the user profile. If there is a better match between block -9- of advertisements and the user profile than between the original block -6- of advertisements and the user profile, receiver -5- detects block -6- of advertisements to replace it subsequently with block -9- of advertisements. If this is not the case, it does not carry out the process of detecting block -6-of advertisements and the receiver continues to store flow -2- of audiovisual content.

This detection is based on calculation of the times (start time "tᵢ" and end time "t_{f}") delimiting a particular block -6- of advertisements in audiovisual content -3-. This detection process during recording is necessary because the process of recording audiovisual content -3- varies according to the time at which the receiver carries out the recording process. Normally, processes for the recording of audiovisual contents -3- are random and depend on receiver -5-. This is why it is necessary for the receiver to determine when a particular block -6- of advertisements begins and ends. Because a particular audiovisual content -3- may comprise more than one block -6- of advertisements, the receiver does or does not determine the start time (tᵢ) and end time (t_{f}) information for each block -6- of advertisements and stores or does not store that information in a register table in a time-ordered way, according to the user's profile record. In order to bring about detection of each block -6- of advertisements, broadcasting header -1-synchronises with receiver -5- periodically sending information about the present status of the content which is being stored in the internal memory of that receiver -5-, and in this way the receiver knows what type of content is being stored at any recording time and can thus determine when a particular block -6- of advertisements starts and ends.

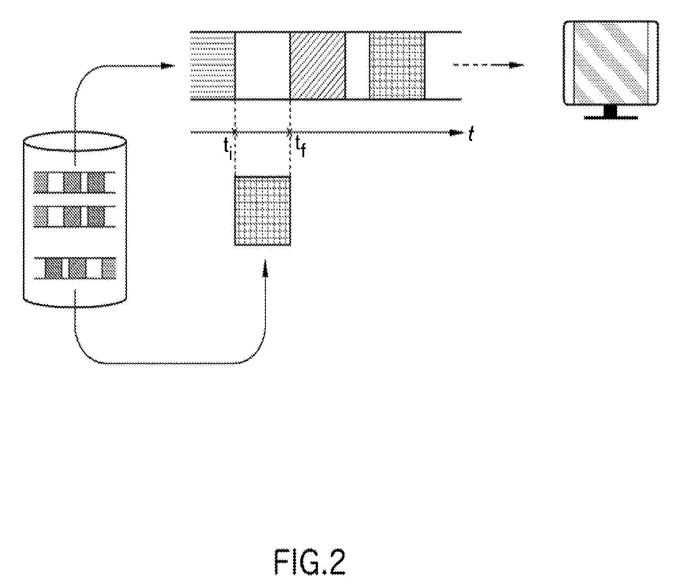

Figure 2 shows a process for the reproduction of a stream -2- of audiovisual content -3- in which a change of reproduction takes place in such a way that a block -9- of advertisements is reproduced instead of an original block -3- of advertisements according to the user's profile record. Initially, receiver -5- stores in its memory the packet -8- of metadata for first audiovisual content -3-which has to be reproduced, which includes all the reference times (tᵢ and t_{f}) for the blocks -6- of advertisements which have to be replaced. While stream -2-of content is being reproduced, receiver -5-, in parallel, carries out a process of monitoring reproduction time in such a way that, when a particular reproduction time coinciding with a start time "tᵢ" is reached, receiver -5-pauses the reproduction of original content -5- and reproduces block -9- of advertisements according to the match with the user profile determined in the recording process previously described. When reproduction of that block -9- of advertisements ends, receiver -5- which has the end time "t_{f}" for block -6- of original advertisements stored in its memory, continues to reproduce original content -3-.

## Claims

1. A method for the dynamic reproduction of audiovisual advertising content in transmissions in push environments without a return channel comprising the following steps:
- receiving and storing at least one item of audiovisual content which has to be reproduced;
- receiving and storing at least one item of audiovisual advertising content together with metadata associated with each item of audiovisual advertising content;
- determination of the insertion time of at least one item of audiovisual advertising content in the audiovisual content which has to be reproduced;
- insertion of at least one item of audiovisual advertising content at the specified time during reproduction of the at least one item of previously stored audiovisual content;
**characterised in that**:
- during the process of storing audiovisual advertising content, the receiver does or does not store at least one item of audiovisual advertising content according to a user profile record stored in the receiver;
- during the reproduction process, the receiver reproduces at least one item of audiovisual advertising content according to the user's profile record;
- during the process of storing the received audiovisual content, a process for determining the start and end times for each item of audiovisual advertising content included in the audiovisual content received is carried out.

2. A method according to claim 1, **characterised in that** during the process of determining the start and end times the broadcasting header sends synchronisation data to the receiver periodically.

3. A method according to claims 1 to 2, **characterised in that** the synchronisation data comprise information relating to the type of audiovisual content which is being stored.

4. A method according to claim 1, **characterised in that** the audiovisual advertising content is stored in a specific memory section of the receiver's memory unit.

5. A method according to claim 4, **characterised in that** the receiver memory unit is of the FIFO type.

6. A method according to claims 1 to 5, **characterised in that** any content is sent at different times and is subsequently recorded and stored in an internal memory.

7. A method according to claims 1 to 6, **characterised in that** during the reproduction process the receiver makes a change reproduction according to a user profile record at a particular start time.

8. A method according to claims 1 to 7, **characterised in that** during the reproduction process the receiver makes a change of reproduction according to a user profile record at a particular end time.

9. A method according to claims 1 to 8, **characterised in that** the user profile record is updated periodically according to at least one type of audiovisual content reproduced.

10. A method according to claims 1 to 9, **characterised in that** the user profile record is updated periodically according to the frequency with which at least one type of audiovisual content is viewed.
